# EUROPÄISCHE PATENTSCHRIFT

(11) **EP 2 576 289 B1**
(45) Veröffentlichungstag und Bekanntmachung des Hinweises auf die Patenterteilung: **04.01.2017**
(21) Anmeldenummer: 11711527.9
(22) Anmeldetag: 28.03.2011
(51) Int. Cl.: B60P 7/15

(54) **VORRICHTUNG ZUR LADEGUTSICHERUNG IN EINEM LADERAUM EINES FAHRZEUGS**
DEVICE FOR SECURING GOODS IN A CARGO COMPARTMENT OF A VEHICLE
DISPOSITIF POUR MAINTENIR UN CHARGEMENT DANS UN ESPACE DE CHARGEMENT D'UN VÉHICULE

(30) Priorität: 07.04.2010 DE 102010003692
(43) Veröffentlichungstag der Anmeldung: 10.04.2013
(73) Patentinhaber: Randt, Stephan, 86159 Augsburg (DE)
(72) Erfinder: Hurler Walter, 86391 Stadtbergen (DE)
(74) Vertreter: Raunecker, Klaus Peter
(86) Internationale Anmeldenummer: PCT/EP2011/054701
(87) Internationale Veröffentlichungsnummer: WO 2011/124488

(56) Entgegenhaltungen:
- WO-A1-02/04246
- DE-A1- 10 259 388
- DE-A1- 19 930 763
- DE-U1- 29 801 555
- US-A1- 2003 161 700
- US-A1- 2006 051 178

## Beschreibung

Die Erfindung betrifft eine Vorrichtung zur Sicherung von Ladegut in einem Laderaum eines Fahrzeugs nach der im Oberbegriff von Anspruch 1 näher definierten Art und ein Fahrzeug nach der im Oberbegriff von Anspruch 9 näher definierten Art. Im Zusammenhang mit der vorliegenden Erfindung umfasst der Begriff Fahrzeug jegliche Art von fahrbarem Transportmittel, wie beispielsweise selbstfahrende Fahrzeuge bzw. Zugfahrzeuge sowie von dem Zugfahrzeug gezogene Anhänger bzw. Auflieger bzw. Trailer.

Der Transport von Ladegut kann im Straßen-, Luft-, Eisenbahn- oder Schiffsverkehr erfolgen. Das zu transportierende Ladegut wird üblicherweise gegen die beim Transport auftretenden physikalischen Bewegungskräfte gesichert. Diese Kräfte treten beispielsweise im Straßenverkehr beim Beschleunigen nach hinten, d.h. gegen die Fahrtrichtung, beim Bremsen nach vorne, d.h. in Fahrtrichtung, beim Durchfahren von Kurven zu den Seiten, d.h. in eine korrespondierende Fahrzeugquerrichtung, und auf unebenen Straßen vertikal, d.h. in Fahrzeughochrichtung, auf. In Regel führt eine ungenügende oder fehlende Sicherung des Ladeguts zu einer Verschiebung des Ladegutes.

Die wesentlichen Verfahren zur Sicherung von Ladegut sind kraftschlüssige und/oder formschlüssige Ladegutsicherungen. Die kraftschlüssige Ladungssicherung wird beispielsweise durch das Niederzurren der Ladung gewährleistet. Hierbei wird die Ladung beispielsweise mittels Zurrgurten auf die Ladefläche gepresst und dadurch die Reibungskraft erhöht, so dass ein Verrutschen der Ladung verhindert wird. Dieser Effekt kann durch die Verwendung von reibwerterhöhenden Unterlagen, welche unter die Ladung gelegt werden, noch verstärkt werden. Bei der formschlüssigen Ladungssicherung wird die Ladung entweder durch bündiges, lückenloses Verladen, oder mittels Schräg- oder Diagonalzurren sowie Kopf- oder Buchtlaschung gesichert, wobei eine alleinige Ladungssicherung durch Formschluss ohne weiteres Niederzurren nur dann zulässig ist, wenn der Fahrzeugaufbau eine entsprechende Stabilität aufweist, um die auftretenden Kräfte aufzunehmen.

In der Offenlegungsschrift EP 2 048 028 A1 wird beispielsweise eine Vorrichtung zur Sicherung von Ladegut in einem Laderaum eines Fahrzeugs beschrieben. Die beschriebene Vorrichtung weist ein teleskopierbares Stangenelement auf, an dessen Enden jeweils ein Arretiergelenk vorgesehen ist, welches zur Fixierung des Stangenelementes an einer Halteeinrichtung der Vorrichtung festlegbar ist. An dem Stangenelement ist mindestens eine Sicherungseinheit zur Festlegung von Ladegut vorgesehen, welche als Befestigungsschelle mit Schlitz ausgeführt ist, an dem mittels Gurten Ladegut festgelegt werden kann.

In der Offenlegungsschrift DE 10 2004 008 832 sowie in der DE 10259388 wird eine Vorrichtung zur Sicherung von Ladegut in einem Laderaum eines Fahrzeugs beschrieben, welche als Einspannvorrichtung ausgeführt ist. Diese enthält mindestens ein Stangenelement, das zwischen einem Boden und einer Decke verspannbar ist. An dem Stangenelement ist ein Adapter befestigbar, der seinerseits zur Befestigung weiterer Halte- und Trageeinrichtungen dient.

Es ist die Aufgabe der vorliegenden Erfindung, eine Vorrichtung zur Sicherung von Ladegut in einem Laderaum eines Fahrzeugs und ein Fahrzeug mit einer verbesserten Nutzung des zur Verfügung stehenden Laderaumes zu schaffen.

Erfindungsgemäß wird diese Aufgabe durch eine Vorrichtung zur Sicherung von Ladegut in einem Laderaum eines Fahrzeugs mit den in Anspruch 1 genannten Merkmalen gelöst.

Erfindungsgemäß wird vorgeschlagen, dass die Sicherungseinheit als ein sich im Wesentlichen in Richtung einer horizontalen Fahrzeugachse erstreckendes Leitelement ausgeführt ist. In vorteilhafter Weise ergibt sich durch den Einsatz der Leitelemente bei praktischer und bequemer Handhabung eine einfache und kostengünstige Sicherung des Ladegutes während des Transports. Die Leitelemente verhindern in vorteilhafte Weise das Verrutschen oder Kippen des Ladeguts aufgrund der während des Transports auf das Ladegut wirkenden Längs- und Querkräfte. Durch die formschlüssige Sicherung des Ladeguts werden Längs- und Querkräfte direkt von den Leitelementen aufgenommen, wodurch zusätzliche zeitraubende Sicherungsmaßnahmen, wie beispielsweise das Niederzurren des Ladegutes mit Zurrgurten, entfallen können. Dies bedeutet, dass eine ausreichende Sicherung des Ladeguts ohne zusätzliche Sicherungselemente, wie beispielsweise Zurrgurte gewährleistet ist. Insbesondere ist eine schnelle Entfernung bzw. Anbringung der Leitelemente an das Ladegut möglich, wodurch sich eine erhebliche Zeiteinsparung beim Entladen bzw. Beladen des Fahrzeugs ergibt.

Erfindungsgemäß ist das Leitelement an mindestens zwei Stangenelementen festgelegt. In vorteilhafter Weise ergibt sich hierdurch eine ganz besonders sichere Festlegung des Ladeguts, da das Leitelement sich an mehreren Stangenelementen abstützt und somit die beim Transport des Ladeguts entstehenden Kräfte sicher durch das Leitelement aufgenommen werden können. Insbesondere können die Leitelemente hierdurch leicht ausgeführt werden, da sie sich mehrfach an den Stangenelementen abstützen, wodurch die Leitelemente nur wenig zu einer Transportgewichtserhöhung beitragen. Ausführungsformen der Erfindung ermöglichen eine kostengünstige einfache Ausführung des Aufbaus des Fahrzeugs, da eine mit einer Plane überspannte Gerüstkonstruktion zur Aufnahme der Vorrichtung zur Sicherung des Ladegutes ausreichend ist. Teure, da in der Regel stabil ausgeführte Bordwände als Transportsicherung, um die auftretenden Kräfte aufzunehmen, sind nicht mehr erforderlich.

Erfindungsgemäß der vorliegenden Erfindung ist das Leitelement über eine Lagereinheit verschiebbar, verschwenkbar und/oder drehbar auf dem zumindest einen Stangenelement gehalten. Das Leitelement ist hierdurch auf dem Stangenelement praktisch zwangsgeführt, so dass das Leitelement in vorteilhafter Weise stets mit dem Stangenelement in Verbindung steht. Vorzugsweise umfasst die Lagereinheit eine auf dem zumindest einen Stangenelement geführte Schelle und ein mit der Schelle verbundenes Koppelelement zur Koppelung mit dem Leitelement. In vorteilhafter Weise kann das Leitelement bzw. können die Leitelemente hierdurch in unterschiedlicher Höhe und unterschiedlichen Erstreckungsrichtungen an den Stangenelementen befestigt werden. Diese Ausgestaltung ermöglicht eine besonders flexible Anpassung der Ladegutsicherung an das zu transportierende Ladegut. Zusätzlich kann eine praktische und kraftschonende Überkopf-Zwischenlagerung der Leitelemente an der Decke des Laderaumes erfolgen.

In weiterer vorteilhafter Ausgestaltung der vorliegenden Erfindung ist das über die Lagereinheit auf dem zumindest einen Stangenelement verschiebbare Leitelement an dem zumindest einen Stangenelement über eine Fixiereinheit arretierbar. In vorteilhafter Weise erfolgt die Arretierung formschlüssig, indem an dem Leitelement mindestens ein Dorn vorgesehen ist, der in einer korrespondierenden Bohrung des Stangenelementes aufnehmbar ist. Hierdurch können die Leitelemente mit hohen Lasten belastet und bei Bedarf dennoch schnell umgehängt werden.

Erfindungsgemäß der vorliegenden Erfindung umfasst die Halteeinrichtung zumindest eine an einer Decke des Laderaumes angeordnete Schiene, in der ein oberes Ende des zumindest einen Stangenelementes verschiebbar gelagert ist. In vorteilhafter Weise kann hierdurch die Position des Stangenelementes flexibel an den jeweiligen Bedarf bzw. an das jeweilige Ladegut angepasst werden. Insbesondere kann das Stangenelement bei Nichtgebrauch in einen Teil des Laderaums verschoben werden, in welchem das Stangenelement nicht stört.

In weiterer vorteilhafter Ausgestaltung der vorliegenden Erfindung umfasst die Halteeinrichtung zumindest eine an einem Boden des Laderaumes angeordnete Aufnahme, in der ein unteres Ende des Stangenelementes aufnehmbar ist. In vorteilhafter Weise ergibt sich hierdurch eine formschlüssige Verbindung, die eine sichere Fixierung des Stangenelementes im Laderaum gewährleistet. Gleichzeitig ist ein schnelles Lösen zum Verschieben des Stangenelementes im Laderaum möglich.

In weiterer vorteilhafter Ausgestaltung der vorliegenden Erfindung umfasst das Stangenelement einen oberen Teil und einen unteren Teil, die über eine dazwischen angeordnete Verstelleinheit gegeneinander verschiebbar und an gewünschter Stelle arretierbar sind. Diese Ausgestaltung ermöglicht ein leichtes Herausziehen des unteren Endes des Stangenelementes aus der Aufnahme im Boden und ein Verschieben des Stangenelementes im Laderaum, ohne dass das Stangenelement in der an der Decke angeordneten Schiene verkantet.

Des Weiteren ist ein Fahrzeug mit zumindest einem Laderaum zur Aufnahme von Ladegut vorgesehen, das eine erfindungsgemäße Vorrichtung zur Sicherung von Ladegut in dem Laderaum des Fahrzeugs aufweist. In vorteilhafter Ausgestaltung der Erfindung umfasst der mindestens eine Laderaum des Fahrzeugs eine Ladefläche, die zumindest einen, im Wesentlichen in Richtung einer vertikalen Fahrzeugachse abgesenkten Bereich aufweist. In vorteilhafter Weise wird hierdurch zusätzlich ein Verrutschen des Ladegutes verhindert, indem sich das Ladegut an den Wänden des abgesenkten Bereiches abstützen kann.

Weitere vorteilhafte Ausgestaltungen und Weiterbildungen der Erfindung ergeben sich aus den restlichen Unteransprüchen.

Eine vorteilhafte Ausführungsform der Erfindung ist in den Zeichnungen prinzipmäßig dargestellt und wird nachfolgend beschrieben.

Dabei zeigen:
- Fig. 1: eine Seitenansicht eines Lastkraftwagens mit einem Laderaum und einem Ausführungsbeispiel einer erfindungsgemäßen Vorrichtung zur Sicherung von Ladegut in dem Laderaum,
- Fig. 2: eine Draufsicht des Lastkraftwagens aus Fig. 1,
- Fig. 3: eine Rückansicht des Lastkraftwagens aus Fig. 1,
- Fig. 4: eine detailliertere Seitenansicht des Ausführungsbeispiels der erfindungsgemäßen Vorrichtung aus Fig. 1 bis 3 mit einem Stangenelement und einem Leitelement,
- Fig. 5: eine detaillierte Seitenansicht des Leitelements mit einem Koppelelement, über das eine auf dem Stangenelement führbare Schelle drehbar mit dem Leitelement verbunden ist,
- Fig. 6: eine Seitenansicht des Leitelementes mit einem Seilzugsystem zur Betätigung eines federbeaufschlagten Fixierdorns,
- Fig. 7a: eine Draufsicht auf ein Betätigungsmittel zur Betätigung des Seilzugsystems aus Fig. 6,
- Fig. 7b: eine Seitenansicht des Betätigungsmittels aus Fig. 7a mit einer Stange, an deren einem Ende zwei hakenförmige sowie zwei gabelförmige Elemente und an deren anderem Ende ein Griff angeordnet sind, und
- Fig. 8: eine Seitenansicht eines Abstandhalteelementes, das zum Einhalten eines definierten Abstandes zwischen zwei Leitelemente einbringbar ist.

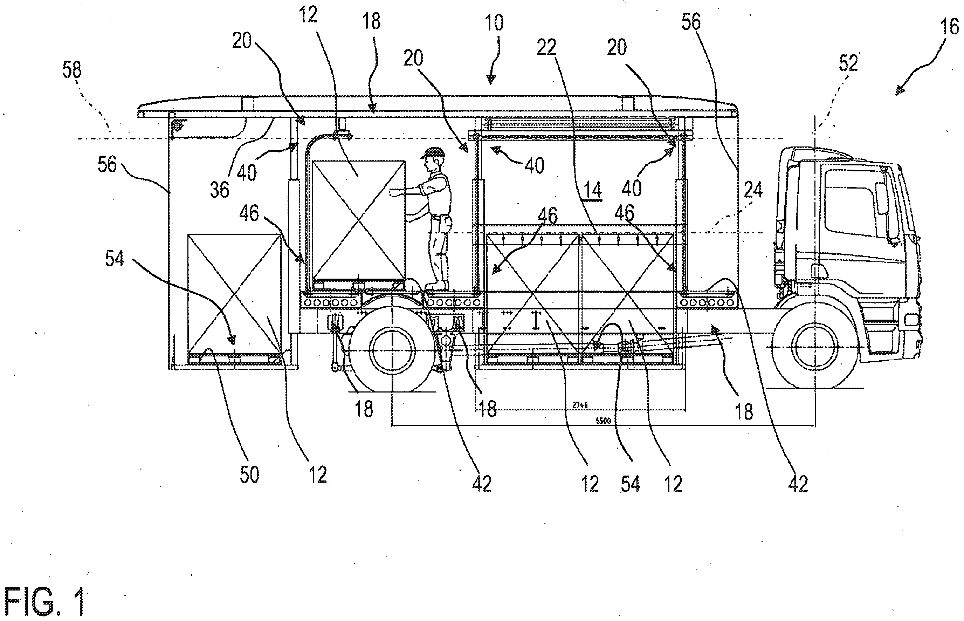

Fig. 1 bis 3 zeigen ein Fahrzeug 16 mit einem Aufbau, welcher einen Laderaum 14 umschließt und einen Boden 42, Wände 56 und eine Decke 36 aufweist. Der Laderaum 14 ist vorzugsweise im Wesentlichen quaderförmig ausgebildet. Der Laderaum 14 ist umgeben von den Wänden 56, dem Boden 42 und der Decke 36. Alternativ hierzu kann der Laderaum 14 auch von einer mit einer Plane überspannten Gerüstkonstruktion umgeben sein.

Zur Sicherung des Ladeguts 12 in dem Laderaum 14 des Fahrzeugs 16 ist eine Vorrichtung 10 mit zumindest einem an einer Halteeinrichtung 18 bewegbar angebrachten Stangenelement 20 und mindestens einer an dem zumindest einen Stangenelement 20 festlegbaren Sicherungseinheit 22 zur Sicherung des Ladeguts 12 vorgesehen. Die Vorrichtung 10 zur Sicherung von Ladegut 12 in dem Laderaum 14 des Fahrzeugs 16 umfasst im vorliegenden Ausführungsbeispiel vorzugsweise mehrere Stangenelemente 20, die mit ihren oberen Enden 40 und ihren unteren Enden 46 über eine Halteeinrichtung 18 im Laderaum 14 festlegbar sind.

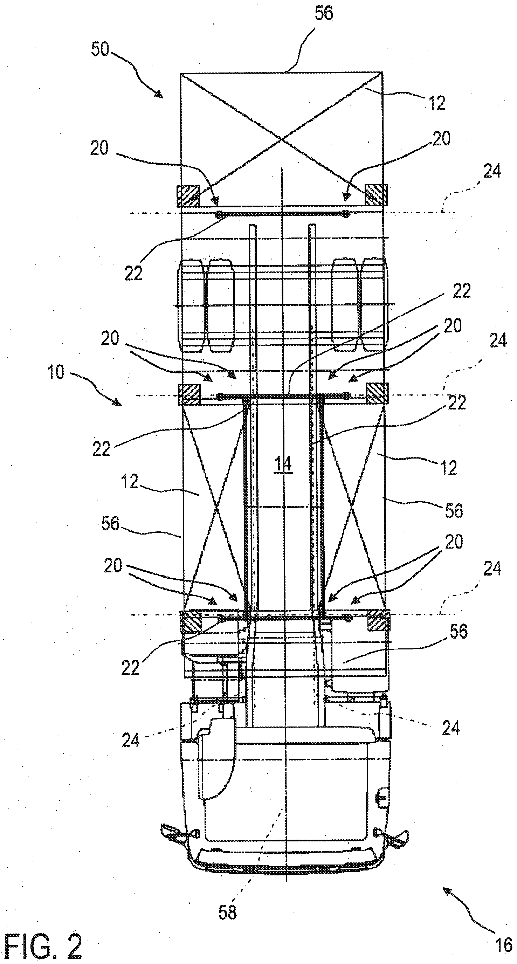

Um eine Vorrichtung 10 zur Sicherung von Ladegut 12 in einem Laderaum 14 eines Fahrzeugs 16 und ein Fahrzeug 16 mit einer verbesserten Nutzung des zur Verfügung stehenden Laderaumes 14 zu schaffen, ist erfindungsgemäß vorgesehen, dass die Sicherungseinheit 22 als ein sich in Richtung einer beliebigen horizontalen Fahrzeugachse 24 erstreckendes Leitelement ausgeführt ist. Vorzugsweise ist das Leitelement 22 hierbei als plankenförmiges Bauteil ausgeführt. Insbesondere ist das Leitelement 22 bevorzugt an einer Seite offen, d.h. im vorliegenden Ausführungsbeispiel als U-förmiges Profil ausgeführt. An jedem Stangenelement 20 ist mindestens ein Leitelement 22 lösbar befestigt. Wie aus Fig. 1 und 2 ersichtlich ist, ist das Leitelement 22 jeweils an mindestens zwei Stangenelementen 20 festgelegt.

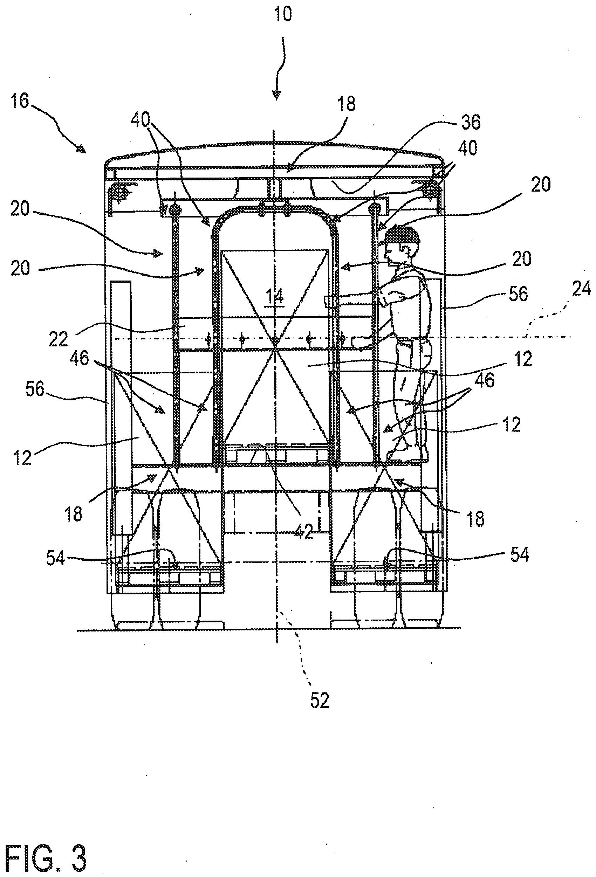

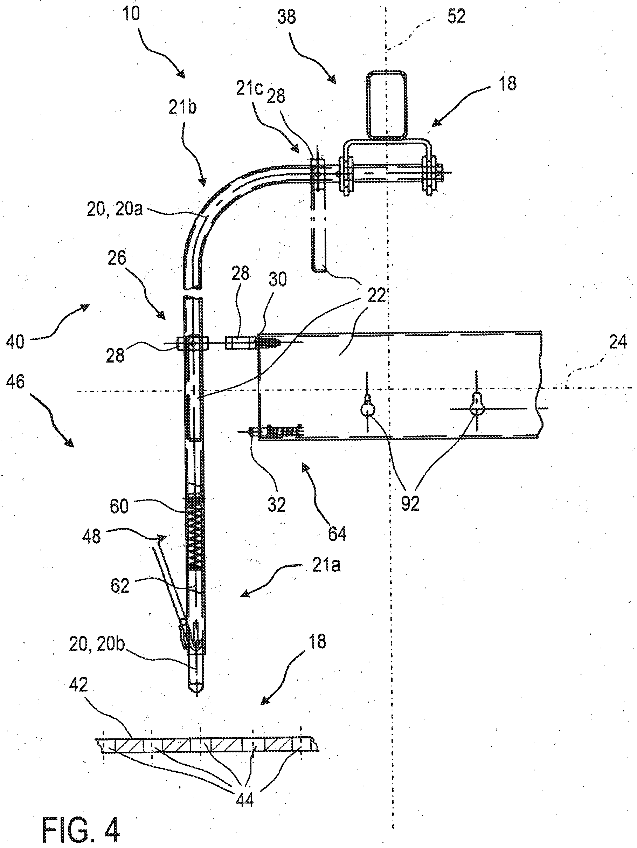

Wie aus Fig. 4 ersichtlich ist, ist das Leitelement 22 über eine Lagereinheit 26 verschiebbar, verschwenkbar und/oder drehbar auf dem zumindest einen Stangenelement 20 gehalten. In vorteilhafter Weise kann das Leitelement 22 hierdurch in unterschiedlicher Höhe und/oder unterschiedlicher horizontaler Erstreckungsrichtung an dem Stangenelement 20 befestigt werden. Im vorliegenden Ausführungsbeispiel umfasst das Stangenelement 20 einen linearen unteren Bereich 21a, der über einen bogenförmigen Übergangsbereich 21b in einen oberen linearen Bereich 21c übergeht, wobei sich der untere Bereich 21a in einer vertikalen Richtung bzw. in Richtung einer vertikalen Fahrzeugachse 52 und der obere Bereich 21c in einer horizontalen Richtung bzw. in Richtung einer horizontalen Fahrzeugachse 24 erstreckt. Diese Ausgestaltung des Stangenelementes 20 ermöglicht, dass das Leitelement 22 bei Nichtgebrauch über die Lagereinheit 26 in den oberen, sich in horizontaler Richtung erstreckenden Bereich 21c des Stangenelements 20 geschoben und somit in eine in Fig. 3 dargestellte, im Bereich der Decke 36 des Laderaumes 14 befindliche Ruheposition gebracht werden kann.

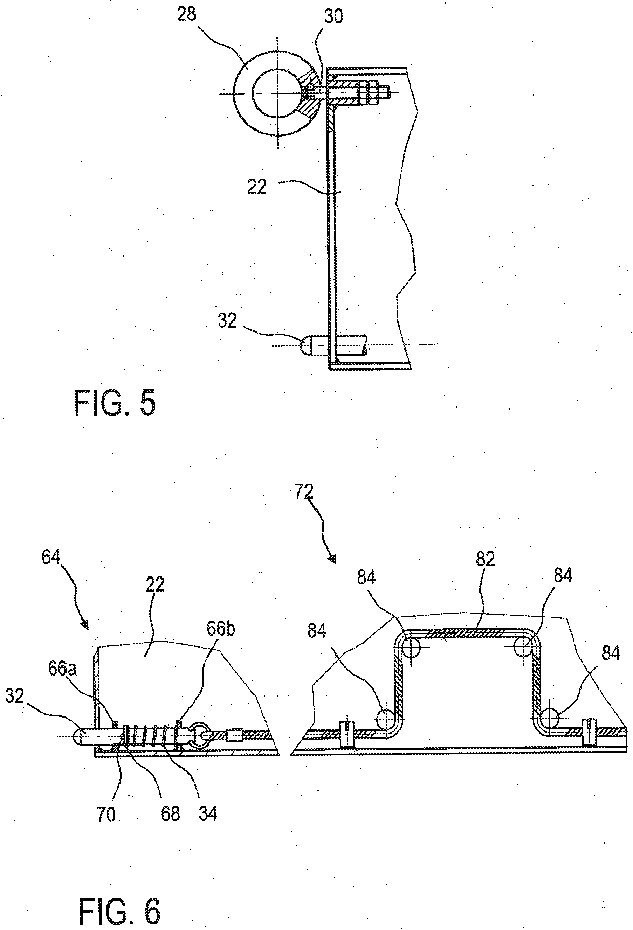

Wie aus Fig. 4 weiter ersichtlich ist, umfasst die Lagereinheit 26 im vorliegenden Ausführungsbeispiel eine auf dem zumindest einen Stangenelement 20 geführte Schelle 28 und ein mit der Schelle 28 verbundenes Koppelelement 30 zur Koppelung mit dem Leitelement 22. Figur 5 zeigt in einer detaillierten Darstellung das Leitelement 22 mit dem innerhalb des U-förmigen Profils an einer Stirnseite angeordneten Koppelelement 30, über das die Schelle 28 drehbar mit dem Leitelement 22 verbunden ist.

Das über die Lagereinheit 26 auf dem zumindest einen Stangenelement 20 verschiebbare Leitelement 22 ist an dem zumindest einen Stangenelement 20 über eine Fixiereinheit 64 arretierbar. Im vorliegenden Ausführungsbeispiel erfolgt die Arretierung über einen Formschluss, indem an dem Leitelement 22 mindestens ein Dorn 32 vorgesehen ist, der in einer korrespondierenden, hier nicht sichtbaren Bohrung des Stangenelementes 22 aufnehmbar ist.

Wie aus Fig. 6 ersichtlich ist, ist der Dorn 32 vorzugsweise über eine Federeinheit 34 an dem Leitelement 22 gelagert. Hierzu ist die als Spiraldruckfeder ausgeführte Federeinheit 34 in Lagerstellen 66a, 66b vorzugsweise innerhalb des U-förmigen Profils 22 gelagert, wobei der Dorn 32 durch eine Aussparung in einer Stirnwand des U-Profils hindurch ragt. Die Federeinheit 34 nimmt den Dorn 32 auf bzw. umgibt den Dorn 32. Die Federeinheit 34 stützt sich an einer Lagerstelle 66b und über eine Scheibe 68 an einem am Dorn 32 vorgesehenen Splint 70 ab. Im ausgefahrenen Zustand des Dornes 32 bzw. in einem Zustand, in dem der Dorn 32 in der Bohrung des Leitelementes 22 aufnehmbar ist bzw. sich in Eingriff befindet, liegt die Federeinheit 34 in einem entspannten Zustand vor. Um den Dorn 32 zu bewegen bzw. außer Eingriff zu bringen, ist ein Seilzugsystem 72 vorgesehen, welches den Dorn 32 gegen eine Druckkraft der Federeinheit 34 aus der Bohrung des Stangenelementes 20 zieht. Hierbei liegt die Federeinheit 34 in einem gespannten Zustand vor. Vorzugsweise weisen die Stangenelemente 20 mehrere definiert positionierte Bohrungen auf, um unterschiedliche Positionen der Bauteile 20, 22 zueinander realisieren zu können. Um die Leitelemente 22 in der Höhe zu versetzen und/oder in der Erstreckungsrichtung zu verändern, muss das Seilzugsystem 72 betätigt werden, damit die Dorne 32 außer Eingriff gebracht werden. Die Leitelemente 22 können dann in vertikaler und/oder horizontaler Richtung verschoben werden. Indem das Seilzugsystem 72 nicht mehr betätigt wird, gelangen die über die Federeinheit 34 vorgespannten Dorne 32 wieder in Bohrungen der Stangenelemente 20.

Das Seilzugsystem 72 umfasst ein Seil 82, das ausgehend von dem Dorn 32 über mehrere als Umlenkrollen ausgeführte Umlenkelemente 84 am Leitelement 22 gelagert und in einem Endpunkt am Leitelement 22 befestigt ist. Zur Betätigung des Seilzugsystems 72 bzw. um das Seil 82 zu straffen, so dass der Dorn 32 gegen die Druckkraft der Federeinheit 34 bewegt wird, werden die hakenförmigen Elemente 78 des Betätigungsmittels 74 in das Seil 82 eingehakt und das Seil 82 durch ein Ziehen des Betätigungsmittels gestrafft. Um das Einhaken zu erleichtern, sind die Umlenkrollen 84 derart angeordnet, dass das Seil gut gegriffen werden kann. Im vorliegenden Ausführungsbeispiel sind die Umlenkrollen 84 derart angeordnet, dass der Verlauf des Seiles 82 eine Stufe ausbildet, so dass das Seil 82 im Bereich der Stufe durch einen manuellen Eingriff mit der Hand gestrafft und der Dorn 32 gegen die Druckkraft der Federeinheit 34 bewegt werden kann.

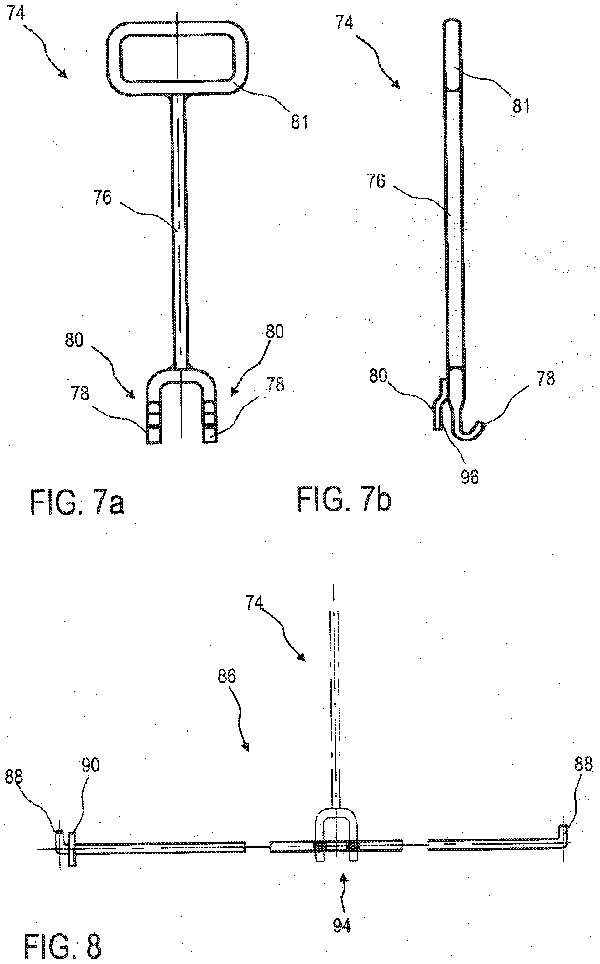

Zur Betätigung des Seilzugsystems 72 kann alternativ auch ein in Fig. 7a und 7b dargestelltes Betätigungsmittel 74 vorzugsweise in Form eines so genannten Enterhakens verwendet werden. Das Betätigungsmittel 74 umfasst eine Stange 76, an deren einem Ende zwei hakenförmige Elemente 78 sowie zwei gabelförmige Elemente 80 und an deren anderem Ende ein Griff 81 angeordnet sind. Insbesondere in schwer erreichbaren Positionen des Leitelementes 22 kann das Seil 82 mit den hakenförmigen Elementen des Betätigungsmittels 84 gegriffen werden.

Wie bereits erwähnt wurde, sind die Stangenelemente 20 mit ihren oberen Enden 40 und ihren unteren Enden 46 über eine Halteeinrichtung 18 im Laderaum 14 festlegbar, wobei die Positionierung der Stangenelemente 20 flexibel an den jeweiligen Bedarf angepasst werden kann. Werden die Stangenelemente 20 beispielsweise nicht benötigt, so können sie beispielsweise derart verschoben werden, dass der Laderaum 14 dann ohne nennenswerte Barrieren zur Verfügung steht. Hierfür umfasst die Halteeinrichtung 18 zumindest eine an einer Decke 36 des Laderaumes 14 angeordnete Schiene 38, in der ein oberes Endes 40 zumindest eines Stangenelementes 20 verschiebbar gelagert ist.

Zur Festlegung der Stangenelemente 20 im Bereich des Bodens 42 umfasst die Halteeinrichtung 18 zumindest eine an einem Boden 42 des Laderaumes 14 angeordnete Aufnahme 44, in der ein unteres Ende 46 eines Stangenelementes 20 aufnehmbar ist. Dies bedeutet, dass die Stangenelemente 20 vorzugsweise formschlüssig am Boden 42 fixierbar sind. Die formschlüssige Fixierung ist über die in Boden 42 des Laderaumes 14 vorgesehene Aufnahmen 44 gewährleistet, in welche die unteren Enden 46 der Stangenelemente 20 einsteckbar sind. Die Fixierung kann somit schnell gelöst und die Stangenelemente 20 verschoben werden.

Besonders vorteilhaft ist es, wenn die Schiene 38 der Halteeinrichtung 18 in Richtung einer horizontalen Fahrzeugmittelachse 58 an der Decke 36 des Laderaumes 14 verläuft. Vorzugsweise ist die Schiene 38 ein längsgeschlitztes Hohlprofil, in welchem ein oberes Ende 40 des Stangenelementes 20 verschiebbar gelagert ist.

Das Stangenelement 20 umfasst einen oberen Teil 20a und einen unteren Teil 20b, die über eine dazwischen angeordnete Verstelleinheit 48 gegeneinander verschiebbar sind und der untere Teil 20b an gewünschter Stelle in einer Aufnahme 44 im Boden 42 des Aufbaus aufnehmbar ist. Die Verstelleinheit 48 umfasst eine Druckfedereinheit 60 und eine Koppeleinheit 62, welche mit dem unteren Teil 20b des Stangenelementes 20 verbunden ist. Hierzu sind die Druckfedereinheit 60 vollständig und ein oberes Ende des unteren Teils 20b des Stangenelementes 20 innerhalb des oberen Teils 20a des Stangenelementes 20 angeordnet, indem das untere Teil 20b des Stangenelementes 20 aus dem oberen Teil 20a des Stangenelementes 20 hinausragt. Die Druckfedereinheit 60 stützt sich somit an einem Ende an dem oberen Teil 20a und an dem anderen Ende an dem unteren Teil 20b des Stangenelementes 20 ab. Im ausgefahrenen Zustand des unteren Teiles 20b des Stangenelementes 20 bzw. in einem Zustand, in dem das untere Teil 20b in der Aufnahme 44 des Bodens 42 aufnehmbar ist bzw. sich in Eingriff befindet, liegt die Druckfedereinheit 60 in einem entspannten Zustand vor. Um das untere Teil 20b zu bewegen bzw. außer Eingriff zu bringen, ist die Koppeleinheit 62 vorgesehen, über welche der untere Teil 20b des Stangenelementes 20 aus der Aufnahme 44 des Bodens 42 gezogen werden kann. Beim Herausziehen liegt die Druckfedereinheit 60 in einem gespannten Zustand vor.

Diese Ausführungsform ermöglicht ein leichtes Anheben des Stangenelementes 20 vom Boden 42 bzw. ein Anheben des Stangenelementes 20 aus der im Boden 42 vorgesehenen Aufnahme 44 und die Verschiebung des Stangenelementes 20 im Laderaum 14, ohne dass das Stangenelement 20 in der Schiene 38 verkantet bzw. in einer Aufnahme 44 des Bodens 42 stecken bleibt. Zum Anheben des Stangenelements 20 bzw. des unteren Teils 20b des Stangenelements 20 wird die Koppeleinheit 62 von den hakenförmigen Elementen 78 des Betätigungsmittels 74 umgriffen und das untere Teil 20b des Stangenelements 20 mit Hilfe des Betätigungsmittels 74 gegen die Druckkraft der Druckfedereinheit 60 bewegt.

Wie aus Fig. 1 und 3 ersichtlich ist, umfasst der Laderaum 14 des Fahrzeugs 16 eine Ladefläche 50, die zumindest einen, im Wesentlichen in Richtung einer vertikalen Fahrzeugachse 52 abgesenkten Bereich 54 aufweist. Dieser Bereich 52 dient zur Aufnahme von Ladegut 12 und verhindert ein Verrutschen desselben, indem sich das Ladegut 12 an den Wänden des abgesenkten Bereiches 52 abstützen kann. Wie bereits erwähnt wurde, ermöglichen Ausführungsformen der vorliegenden Erfindung, dass das Leitelement 22 in unterschiedlicher Höhe und/oder unterschiedlicher horizontaler,Erstreckungsrichtung an dem Stangenelement 20 und somit auch ganz unten, d.h. in der Nähe der Ladefläche 50 des Laderaums 14 befestigt werden kann. Hierdurch kann das Leitelement 22 beispielsweise als Ladehilfe dienen und vorzugsweise als Anschlag und/oder Sicherung beim Beladen verwendet werden, insbesondere wenn im Beladebereich die Ladefläche 50 einen abgesenkten Bereich 54 aufweist.

Um zwischen den Leitelementen 22 definierte Abstände einzuhalten, können Abstandhalteelemente 86 eingesetzt werden. Fig. 8 zeigt eine Seitenansicht eines derartigen Abstandhalteelementes 86, das zum Einhalten des definierten Abstandes zwischen zwei Leitelemente 22 einbringbar ist. Das Abstandhalteelement 86 ist als stangenförmiges Element mit abgewinkelten Enden 88 ausgeführt, wobei mindestens vor einem abgewinkelten Ende 88 eine Scheibe 90 auf dem Abstandhalteelement 86 vorgesehen ist. Derartige Abstandhalteelemente 86 können in einer ersten Ausführungsform in verschiedenen, aber fest vorgegebenen Längen ausgeführt und im Fahrzeug 16 vorhanden sein. Bei einer bevorzugten Ausführungsform sind die Abstandshalteelemente 86 mit einer verstellbaren Länge bzw. teleskopierbar ausgeführt. Die verstellbare Länge kann beispielsweise über eine Gewindeklemmung erreicht werden, die in vorteilhafter Weise eine stufenlose Verstellung der Länge des Abstandhalteelements 86 ermöglicht.

Zur Befestigung des Abstandhaltelementes 86 an den Leitelementen 22 weisen die Leitelemente 22 vorzugsweise schlüssellochartig geformte Aussparungen 92 auf, in welchen die abgewinkelten Enden 88 des Abstandhalteelementes 86 aufnehmbar sind. Bei der Montage des Abstandhalteelementes 86 wird nun ein abgewinkeltes Ende 88 in eine Aussparung 92 eines Leitelementes 22 eingeführt und das Abstandhalteelement 86 anschließend etwas gedreht, so dass das abgewinkelte Ende 88 an der dem Abstandhalteelement 86 entgegengesetzt liegenden Seite des Leitelementes 22 anliegt. Ein Herausziehen des abgewinkelten Endes 88 aus der Aussparung 92 ist somit nicht mehr möglich. Ein Hineinschieben des Abstandhalteelementes 86 wird durch die Scheibe 90 verhindert. Um das Abstandhalteelement 86 zu drehen, weist dieses einen abgeplatteten Bereich 94 auf, der von den ebenfalls Abplattungen 96 aufweisenden gabelförmigen Elementen 80 des Betätigungsmittels 74 umgriffen werden kann, indem die flachen Bereiche 94, 96 des Abstandhalteelementes 86 und des gabelförmigen Elements 80 torsionsfest aneinander anliegen. Das Abstandhalteelement 86 kann somit über das Betätigungsmittel 74 auf Grund der Hebelwirkung mühelos gedreht werden.

## Patentansprüche

1. Vorrichtung zur Sicherung von Ladegut (12) in einem Laderaum (14) eines Fahrzeugs (16) mit zumindest einem an einer Halteeinrichtung (18) bewegbar angebrachten Stangenelement (20) und mindestens einer an dem zumindest einen Stangenelement (20) festlegbaren Sicherungseinheit (22) zur Sicherung von Ladegut (12), wobei die Sicherungseinheit (22) als ein sich im Wesentlichen in Richtung einer horizontalen Fahrzeugachse (24) erstreckendes Leitelement ausgeführt ist, wobei
die Halteeinrichtung (18) zumindest eine an einer Decke (36) des Laderaumes (14) angeordnete Schiene (38) umfasst, in der ein oberes Ende (40) des zumindest einen Stangenelementes (20) verschiebbar gelagert ist, **dadurch gekennzeichnet, daß** das Leitelement (22) an mindestens zwei Stangenelementen (20) festgelegt ist, und wobei das Leitelement (22) über eine Lagereinheit (26) verschiebbar, verschwenkbar und/oder drehbar auf den mindestens zwei Stangenelementen (20) gehalten ist.

2. Vorrichtung nach Anspruch 1,
**dadurch gekennzeichnet, dass** die Lagereinheit (26) eine auf dem zumindest einen Stangenelement (20) geführte Schelle (28) und ein mit der Schelle (28) verbundenes Koppelelement (30) zur Koppelung mit dem Leitelement (22) umfasst.

3. Vorrichtung nach einem der Ansprüche 1 oder 2,
**dadurch gekennzeichnet, dass** das über die Lagereinheit (26) auf dem zumindest einen Stangenelement (20) verschiebbare Leitelement (22) an dem zumindest einen Stangenelement (20) üher eine Fixiereinheit (64) arretierbar ausgeführt ist.

4. Vorrichtung nach einem der Ansprüche 1 bis 3,
**dadurch gekennzeichnet, dass** die Halteeinrichtung (18) zumindest eine an einem Boden (42) des Laderaums (14) angeordnete Aufnahme (44) umfasst, in der ein unteres Ende (46) des Stangenelementes (20) aufnehmbar ist.

5. Vorrichtung nach einem der Ansprüche 1 bis 4,
**dadurch gekennzeichnet, dass** das Stangenelement (20) einen oberen Teil (20a) und einen unteren Teil (20b) umfasst, die über eine dazwischen angeordnete Verstelleinheit (48) gegeneinander verschiebbar und an gewünschter Stelle arretierbar sind.

6. Fahrzeug (16) mit zumindest einem Laderaum (14) zur Aufnahme von Ladegut (12),
**gekennzeichnet durch** mindestens eine Vorrichtung (10) zur Sicherung von Ladegut (12) in dem Laderaum (14) des Fahrzeugs (16), die nach einem der Ansprüche 1 bis 7 ausgeführt ist.

7. Fahrzeug nach Anspruch 6,
**dadurch gekennzeichnet, dass** der mindestens eine Laderaum (14) eine Ladefläche (50) umfasst, die zumindest einen, im Wesentlichen in Richtung einer vertikalen Fahrzeugachse (52) abgesenkten Bereich (54) aufweist.

## Claims

1. Device for securing goods (12) in a cargo compartment (14) of a vehicle (16), with at least one bar element (20) which is attached movably to a holding device (18), and at least one securing unit (22), which is fixable on the at least one bar element (20), for securing goods (12), wherein the securing unit (22) is designed as a guiding element extending substantially in the direction of a horizontal vehicle axis (24), wherein the holding device (18) comprises at least one rail (38) which is arranged on a ceiling (36) of the cargo compartment (14) and in which an upper end (40) of the at least one bar element (20) is displaceably mounted,
**characterized in that**
the guiding element (22) is fixed on at least two bar elements (20), and wherein the guiding element (22) is held displaceably, pivotably and/or rotatably on the at least two bar elements (20) via a bearing unit (26).

2. Device according to Claim 1,
**characterized in that**
the bearing unit (26) comprises a clip (28) guided on the at least one bar element (20), and a coupling element (30), which is connected to the clip (28), for coupling to the guiding element (22).

3. Device according to either of Claims 1 and 2,
**characterized in that**
the guiding element (22) which is displaceable on the at least one bar element (20) via the bearing unit (26) is designed to be lockable on the at least one bar element (20) via a fixing unit (64).

4. Device according to one of Claims 1 to 3,
**characterized in that**
the holding device (18) comprises at least one receptacle (44) which is arranged on a floor (42) of the cargo compartment (14) and in which a lower end (46) of the bar element (20) can be accommodated.

5. Device according to one of Claims 1 to 4,
**characterized in that**
the bar element (20) comprises an upper part (20a) and a lower part (20b), which parts are displaceable in relation to each other via an adjustment unit (48) arranged in between and are lockable at the desired location.

6. Vehicle (16) with at least one cargo compartment (14) for receiving goods (12),
**characterized by**
at least one device (10) for securing goods (12) in the cargo compartment (14) of the vehicle (16), which device is designed according to one of Claims 1 to 7.

7. Vehicle according to Claim 6,
**characterized in that**
the at least one cargo compartment (14) comprises a loading surface (50) which has at least one region (54) which is lowered substantially in the direction of a vertical vehicle axis (52).

## Revendications

1. Dispositif pour maintenir un bien de chargement (12) dans un espace de chargement (14) d'un véhicule (16) pourvu d'au moins un élément de sangle (20) mobile par rapport à une installation de maintien (18) et au moins une unité de fixation (22) agencée pour être couplée audit au moins un élément de sangle (20), pour maintenir ledit bien de chargement (12), dans lequel l'unité de fixation (22) est réalisée sous la forme d'un élément de guidage horizontal s'étendant sensiblement dans la direction de l'axe (24) du véhicule, dans lequel
l'installation de maintien (18) comporte au moins un rail (38) disposé contre un plafond (36) de l'espace de chargement (14), dans lequel une extrémité supérieure (40) dudit au moins un élément de sangle (20) peut coulisser,
**caractérisé en ce que**,
l'élément de guidage (22) est lié à au moins deux éléments de sangles (20), et dans lequel, l'élément de guidage (22) peut se déplacer par coulissement, par pivotement et/ou par rotation sur au moins deux éléments de sangle (20), dans une unité de stockage (26).

2. Dispositif selon la revendication 1,
**caractérisé en ce que**,
l'unité de stockage (26) comporte un collier (28) guidé sur au moins un élément de sangle (20) et un élément de couplage (30) lié au collier (28) pour assurer un couplage avec l'élément de guidage (22).

3. Dispositif selon l'une des revendications 1 ou 2,
**caractérisé en ce que**,
l'élément de guidage (22) coulissant sur ledit au moins un élément de sangle (20) dans l'unité de stockage (26), est conçu pour pouvoir être arrêté au moyen d'une unité de blocage (64) par ledit au moins un élément de sangle (20).

4. Dispositif selon l'une des revendications 1 à 3,
**caractérisé en ce que**,
l'installation de maintien (18) comporte au moins un dégagement (44) ménagé sur un plancher (42) de l'espace de chargement (14), dans lequel une extrémité inférieure (46) de l'élément de sangle (20) peut être engagée.

5. Dispositif selon l'une des revendications 1 à 4,
**caractérisé en ce que**,
l'élément de sangle (20) comporte une partie supérieure (20a) et une partie inférieure (20b), qui sont coulissantes l'une en direction de l'autre au moyen d'une installation de réglage (48) et peuvent être bloquées dans une position souhaitée.

6. Véhicule (16) comportant au moins un espace de chargement (14) pour réceptionner des biens de chargement (12),
**caractérisé par**,
au moins un dispositif (10) pour maintenir un bien de chargement (12) dans un espace de chargement (14) d'un véhicule (16) selon l'une des revendications 1 à 7.

7. Véhicule selon la revendication 6,
**caractérisé en ce que**,
ledit au moins un espace de chargement (14) comporte une surface de chargement (50) qui comporte au moins un secteur sensiblement incliné (54) par rapport à un axe vertical (52) du véhicule.
